# NEUE EUROPÄISCHE PATENTSCHRIFT

(11) **EP 1 239 207 B2**
(45) Veröffentlichungstag und Bekanntmachung des Hinweises auf die Entscheidung über den Einspruch: **21.12.2011**
(45) Hinweis auf die Patenterteilung: 23.11.2005
(21) Anmeldenummer: 02001371.0
(22) Anmeldetag: 19.01.2002
(51) Int. Cl.: F16L 33/02

(54) **Federbandelement**
Flat spring clamp
Collier de serrage en forme de bande

(30) Priorität: 01.03.2001 DE 10110020; 19.03.2001 DE 10113444
(43) Veröffentlichungstag der Anmeldung: 11.09.2002
(73) Patentinhaber: Muhr und Bender KG, 57439 Attendorn (DE)
(72) Erfinder: Hendrichs, Heinz, 57413 Finnentrop (DE); Hücker, Franz, 57368 Lennestadt (DE); Hufnagel, Mario, 57439 Attendorn (DE)
(74) Vertreter: Gesthuysen, von Rohr & Eggert

(56) Entgegenhaltungen:
- EP-A- 0 971 162
- DE-A1- 3 043 108
- DE-U- 1 955 253
- GB-A- 461 048

## Beschreibung

Die Erfindung betrifft ein Federbandelement mit einem ein Schlauchende im wesentlichen ringförmig umfassenden Federband und mit zwei einander überlappenden, im wesentlichen in Umfangsrichtung verlaufenden Spannenden, wobei im klemmenden Zustand ein bestimmter erster Durchmesser vorliegt - Klemmzustand - und das Federband entgegen der eigenen Federkraft mit Hilfe eines Spannwerkzeuges auf einen zweiten größeren Durchmesser aufspreizbar ist - Aufspreizzustand. Ein Federbandelement nach dem Oberbegriff des Anspruchs 1 ist aus der Druckschrift GB-A-461 048 bekannt.

Federbandelemente sind in Form von Federbandschellen seit vielen Jahren und in verschiedenen Ausführungsformen bekannt (vgl. die deutschen Patentschriften 36 33 486, 38 32 875, 43 05 649 und 44 24 046). Mit Hilfe solcher Federbandschellen wird beispielsweise der druckdichte Sitz von Schlauchenden auf den Anschlußstutzen des Kühlwassersystems eines Kraftfahrzeugmotors gewährleistet. Derartige Federbandschellen weisen im Klemmzustand einen bestimmten Innendurchmesser auf und können mit Hilfe eines an den Spannenden angreifenden Spannwerkzeugs entgegen der eigenen Federkraft des Federbandes auf einen erheblich größeren Durchmesser aufgespreizt werden - Aufspreizzustand -, in welchem die Federbandschelle dann einen gegenüber dem Außendurchmesser des Schlauchendes größeren Innendurchmesser aufweist und somit leicht über das auf einen Anschlußstutzen zu stülpende Schlauchende bis an die jeweilige Montagestelle bewegt werden kann. Der druckdichte Sitz eines Schlauchendes auf einem Anschlußstutzen wird einerseits durch die Eigenelastizität des Schlauchendes selbst, andererseits durch die Federkraft der Federbandschelle, d. h. des Federbandes gewährleistet, da die Federbandschelle im Klemmzustand geringfügig entgegen ihrer eigenen Federkraft aufgeweitet ist.

Bei den bekannten Federbandschellen sind die Spannenden im wesentlichen radial abstehend vom Federband ausgeführt. Dies hat zum einen den Vorteil, daß die Spannenden zum Angreifen des Spannwerkzeuges leicht zugänglich sind, ermöglicht zum anderen die Anordnung eines Halteelements, wodurch die Federbandschelle im geöffneten Zustand fixiert werden kann.

Im Stand der Technik ist eine Vielzahl von Vorschlägen gemacht worden, wie die Spannenden einerseits und das Halteelement andererseits auszubilden sind, um für den Mechaniker eine möglichst einfache Montage der Federbandschelle im Motorraum eines Kraftfahrzeuges zu ermöglichen, wobei das Abziehen des Halteelements leicht und sicher erfolgen soll. Nachteilig bei den bekannten Federbandschellen ist jedoch, daß aufgrund der radial abstehenden Spannenden und des die Spannenden übergreifenden Halteelements ein im Vergleich zum Durchmesser der Federbandschelle relativ großer Bauraumbedarf erforderlich ist. Außerdem besteht die Gefahr, daß benachbart zu der Federbandschelle angeordnete Bauteile durch die radial abstehenden Spannenden beschädigt werden, insbesondere dann, wenn der Anschlußstutzen, auf dem die Federbandschelle befestigt ist, oder die benachbarten Bauteile beim Betrieb des Fahrzeuges Schwingungen ausüben.

Der Erfindung liegt nun die Aufgabe zugrunde, ein Federbandelement der eingangs beschriebenen Art anzugeben, das nur einen geringen Bauraumbedarf aufweist und so ausgebildet ist, daß eine Beschädigung benachbarter Bauteile durch das Federbandelement vermieden wird.

Die zuvor genannte Aufgabe ist durch das nach Anspruch 1 erfindungsgemäße Federbandelement gelöst bei dem die Spannenden im Klemmzustand radial nicht über das dann kreisrunde Federband überstehen. Durch den Verzicht auf die radial abstehenden Spannenden steht ein Federbandring mit minimalen Abmessungen zur Verfügung, der somit auch nur einen minimalen Bauraumbedarf aufweist. Durch die im Nachhinein recht einfach erscheinende erfindungsgemäße Maßnahme wird nicht nur der Außendurchmesser des Federbandelements auf ein Minimum reduziert, es werden auch Beschädigungen benachbarter Bauteile verhindert, da der Federbandring keine überstehenden Spannenden mehr aufweist.

Die Erfindung nimmt dabei bewußt einen scheinbaren Nachteil in Kauf, daß nämlich der erfindungsgemäße Federbandring, nachdem er einmal in den Klemmzustand gebracht worden ist, nicht wieder - zumindest nicht ohne großen Aufwand - demontiert, d.h. in den Aufspreizzustand zurückgebracht werden kann. Dieser vermeintliche Nachteil wird sogar zu einem Vorteil, wenn beispielsweise eine Verbindung zweier Anschlußstutzen gelöst werden soll, wobei die beiden Anschlußstutzen anderweitig, z. B. über einen Bajonettverschluß, miteinander verbunden sind. Hierbei ist es gewollt, daß nicht die Schlauchenden durch Lösen des Federbandringes von den Anschlußstutzen gezogen werden, sondern die beiden Anschlußstutzen z. B. mit Hilfe des Bajonettverschlusses voneinander getrennt werden. Dadurch, daß bei dem erfindungsgemäßen Federbandring eine Demontage nicht möglich ist, wird somit in einem solchen Fall eine fehlerhafte Demontage durch den Monteur verhindert.

Bei dem erfindungsgemäßen Federbandring weist das Federband benachbart zu den Spannenden jeweils einen Freischnitt auf. Ein solcher Freischnitt ermöglicht das Angreifen eines Spannwerkzeuges an den Spannenden, ohne daß die Spannenden seitlich über das Federband hinausragen müssen. Durch diese Maßnahme wird somit der benötigte Bauraumbedarf weiter reduziert. Die Spannenden und die Freischnitte sind dabei so ausgebildet, daß das Spannwerkzeugs im wesentlichen entlang der Umfangs-Mittellinie des Federbandes angreifen kann. Dadurch wird gewährleistet, daß der Federbandring beim Aufspreizen symmetrisch zur Mittellinie aufgeweitet wird, so daß eine gleichmäßige Belastung des Federbandes gewährleistet ist.

Erfindungsgemäß ist eine mechanische Überdehnungsschutzeinrichtung vorgesehen, die zwischen den Spannenden wirksam ist. Eine solche mechanische Überdehnungsschutzeinrichtung verhindert ein Aufspreizen des Federbandringes wesentlich über den zulässigen Aufspreizzustand hinaus. In jedem Fall ist es durch das Vorsehen einer solchen mechanischen Überdehnungsschutzeinrichtung ausgeschlossen, daß eine Überdehnung und damit eine mögliche Schädigung des Federbandringes auftritt.

Eine konstruktiv besonders einfache Ausgestaltung der Überdehnungsschutzeinrichtung sieht vor, daß die Spannenden je einen als Anschlag dienenden Vorsprung aufweisen, wobei die beiden Vorsprünge einander zugewandt sind. Beim Aufspreizen des Federbandringes mit Hilfe eines Spannwerkzeuges stoßen die beiden Vorsprünge aneinander, so daß eine Überdehnung des Federbandringes verhindert wird.

Gemäß einer weiteren besonders bevorzugten Ausgestaltung der Erfindung weist das Federband einen über seinen Umfang variierenden Querschnitt auf, insbesondere eine über seinen Umfang variierende Breite, wobei die Breite in Richtung der Spannenden, wahlweise Materialreduzierung mittels Ausstanzung diverser Fenstergeometrien um optimalen gleichbleibenden Spannungszustand zu erzielen, abnimmt. Da bei dem Federbandring im Klemmzustand die größte Beanspruchung in dem den Spannenden gegenüberliegenden Mittelbereich des Federbandes auftreten, kann durch eine entsprechende Variation des Querschnitts über den Umfang des Federbandes erreicht werden, daß in jedem Bereich des Federbandes im wesentlichen die gleiche Spannung auftritt. Unter Spannung wird dabei die auf die Fläche normierte Beanspruchung verstanden. Somit wird durch eine Variation der Breite des Federbandes das Material optimal ausgenutzt, wobei entweder durch eine Verringerung der Breite, wahlweise Materialreduzierung mittels Ausstanzung diverser Fenstergeometrien um optimalen gleichbleibenden Spannungszustand zu erzielen, des Federbandes in der Nähe der Spannenden eine Reduzierung des Gewichts des Federbandringes erreichbar ist oder durch eine gezielte Vergrößerung der Breite des Federbandes in dem den Spannenden gegenüberliegenden Bereich eine Vergrößerung der Federkraft des Federbandringes möglich ist.

Die vorzugsweise anzuwendende Maßnahme, das Federband des erfindungsgemäßen Federbandringes mit einem über seinen Umfang variierenden Querschnitt zu versehen, läßt sich auch dadurch realisieren, daß in dem Federband Ausstanzungen vorgenommen werden, so daß in dem Federband gleichsam Fenster entstehen. Dabei werden dann die Fenstergeometrien so gewählt, daß die anzustrebende gleiche Spannung im Federband erreicht wird.

Im einzelnen gibt es nun eine Vielzahl von Möglichkeiten, den erfindungsgemäßen Federbandring auszugestalten und weiterzubilden. Dazu wird verwiesen einerseits auf die dem Patentanspruch 1 nachgeordneten Patentansprüche, andererseits auf die Beschreibung eines bevorzugten Ausführungsbeispiels in Verbindung mit der Zeichnung. In der Zeichnung zeigen
- Fig. 1: einen Federbandring im Klemmzustand,
- Fig. 2: den Federbandring aus Fig. 1 im Aufspreizzustand,
- Fig. 3: den Federbandring aus Fig. 1 im abgewickelten Zustand,
- Fig. 4: den abgewickelten Zustand einer anderen Ausführungsform eines erfindungsgemäßen Federbandringes und

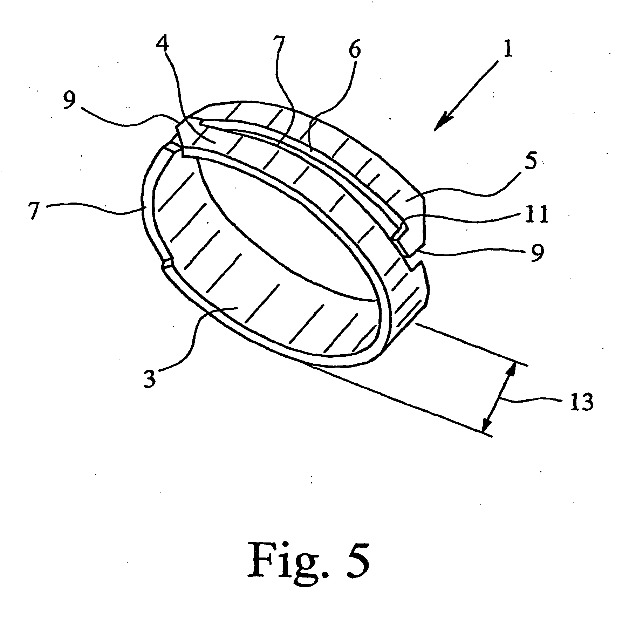

- Fig. 5: eine perspektivische Ansicht des Federbandringes aus Fig. 1.

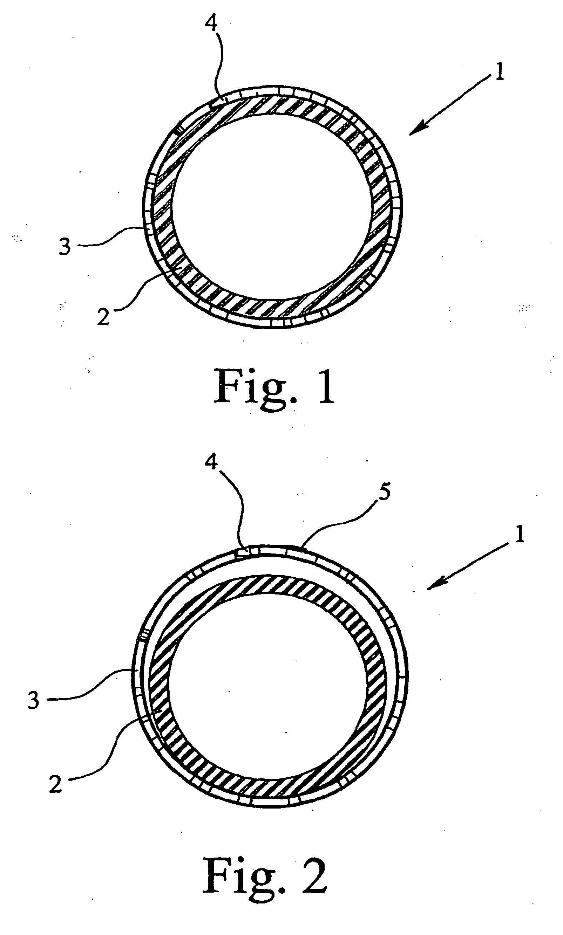

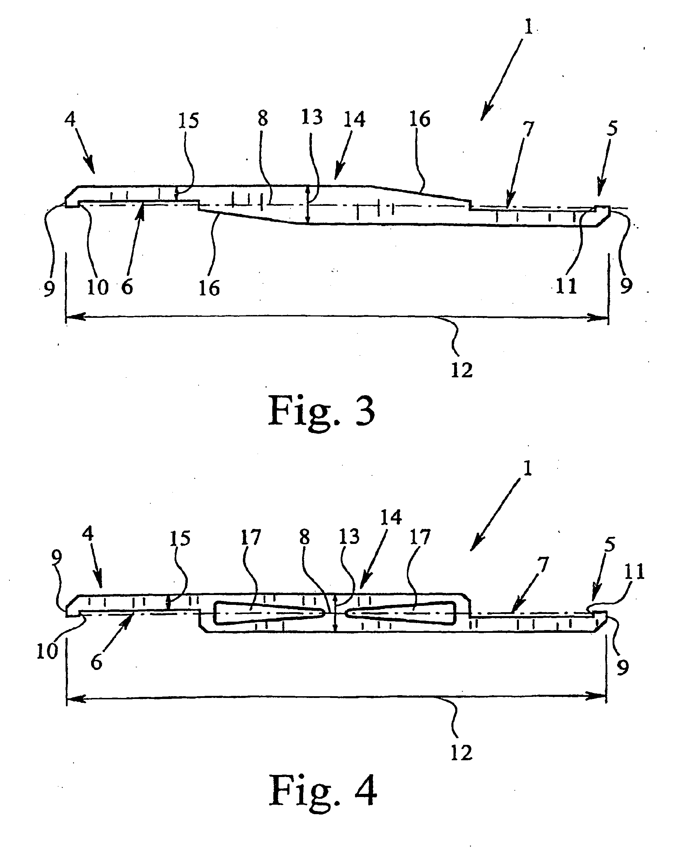

In Fig. 1 ist ein Federbandring 1 dargestellt, der auf ein Schlauchende 2 eines Schlauches aufgesetzt ist. Der Federbandring 1 dient zur festen Anbindung von Schläuchen an Rohre, Abzweigstücke oder Steckverbinder in Kühlwassersystemen, Kraftstoffsystemen oder Luftleitungen, insbesondere im Motorraum eines Kraftfahrzeuges. Der Federbandring 1 besteht aus einem im wesentlich ringförmig verlaufenden Federband 3 und zwei einander überlappenden, im wesentlichen in Umfangsrichtung verlaufenden Spannenden 4, 5. Das Federband 3 und die Spannenden 4, 5 sind einstückig ausgebildet, so daß die Spannenden 4, 5 die Enden des Federbandes 3 bilden. Im klemmenden Zustand, der im folgenden stets als Klemmzustand bezeichnet wird, hat der Federbandring 1 einen bestimmten (Innen-)durchmesser, der etwas geringer als der Außendurchmesser des Schlauchendes 2 ist, so daß das Schlauchende 2 druckdicht auf einen hier nicht dargestellten Anschlußstutzen gepreßt wird. Dies ist in Fig. 1 und Fig. 4 - dort jedoch ohne ein Schlauchende 2 - dargestellt. Dort ist leicht zu erkennen, daß die Spannenden 4, 5 im Klemmzustand radial nicht über das kreisrunde Federband 3 überstehen. Die Spannenden 4, 5 verlaufen vielmehr ausschließlich in Umfangsrichtung des Federbandes 3, so daß die Außenabmessungen des Federbandes 3 im wesentlichen dem Außendurchmesser des Schlauchendes 2 entsprechen. Der von dem Federbandring 1 benötigte Bauraumbedarf ist somit sehr gering. Darüber hinaus ist eine Beschädigung benachbarter Bauteile durch die Vermeidung radial überstehender Spannenden ausgeschlossen.

Das Federband 3 ist entgegen der eigenen Federkraft mit Hilfe eines nicht näher dargestellten Spannwerkzeuges, bei dem es sich um eine bestimmte Zange handeln kann, auf einen zweiten größeren Durchmesser aufspreizbar. Dieser Zustand, der im folgenden stets als Aufspreizzustand bezeichnet wird, ist in Fig. 2 dargestellt. Benachbart zu den Spannenden 4, 5 weist das Federband 3 jeweils einen Freischnitt 6, 7 auf. Die Spannenden 4, 5 und die Freischnitte 6, 7 sind dabei so ausgebildet, daß ein Spannwerkzeug im wesentlichen entlang der Umfangs-Mittellinie 8 des Federbandes 3 angreifen kann. Um einem als Zange ausgebildeten Spannwerkzeug gute und sichere Angriffspunkte beim Aufspreizen des Federbandes 3 zu ermöglichen, sind die Stirnflächen der Spannenden 4, 5 als im wesentlichen senkrecht zur Umfangs -Mittellinie 8 des Federbandes 3 verlaufende Kanten 9 ausgebildet. Durch diese Kanten 9 wird eine symmetrisch zur Umfangs-Mittellinie 8 wirkende Beanspruchung des Federbandes 3 unterstützt.

Die Spannenden 4, 5 weisen - gegenüberliegend von den Kanten 9 - je einen Vorsprung 10, 11 auf, welche zusammen als Überdehnungsschutzeinrichtung für das Federband 3 dienen. Die beiden Vorsprünge 10, 11 sind einander zugewandt angeordnet, so daß dann beim Aufspreizen des Federbandringes 1 die beiden Vorsprünge 10, 11 aneinander stoßen und somit ein Überdehnen des Federbandes 3 verhindern können.

Wie insbesondere aus Fig. 3 ersichtlich, weist das Federband 3 in diesem Ausführungsbeispiel eine über seinen Umfang 12 - welcher im abgewickelten Zustand des Federbandringes 1 der Länge des Federbandes 3 entspricht - variierende Breite 13 auf, wobei die Breite 13 in Richtung der Spannenden 4, 5 abnimmt. Sowohl beim Aufspreizen als auch im Klemmzustand des Federbandringes 1 ist die auf das Federband 3 wirkende Biegebeanspruchung in der Mitte 14 des Federbandes 3, d.h. an dem am weitesten von den Spannenden 4, 5 entfernten Bereich, am größten. Damit der Federbandring 1 eine vorgegebene Federkraft aufweist, muß somit das Federband 3 in der Mitte 14 eine bestimmte Breite 13 aufweisen. Da die auf das Federband 3 wirkende Biegebeanspruchung mit zunehmenden Abstand von der Mitte 14 abnimmt, kann auch die Breite 13 des Federbandes 3 mit zunehmenden Abstand von der Mitte 14 geringer sein. Insgesamt kann somit ein Federband 3 realisiert sein, bei dem das zur Verfügung stehende Material optimal ausgenutzt wird, d.h. bei dem die Spannung in jedem Abschnitt des Federbandes 3 im wesentlichen gleich groß ist.

Die Breite 15 der Spannenden 4, 5 ist etwas geringer als die Hälfte der maximalen Breite 13 des Federbandes 3, so daß einerseits die beiden Spannenden 4, 5 beim Aufspreizen des Federbandringes 1 aneinander vorbeigeführt werden können, andererseits die Gesamtbreite des Federbandringes 1 nicht größer ist als die maximale Breite 13 des Federbandes 3. Anstelle der hier dargestellten linearen Breitenreduzierung über die Schrägen 16 ist selbstverständlich auch eine andere Form der Variation der Breite 13 möglich.

Das, was beim Ausführungsbeispiel nach den Fig. 1 bis 3 - wie in Fig. 3 dargestellt - durch eine variierende Breite 13 des Federbandes 3 erreicht ist, ist beim Ausführungsbeispiel nach Fig. 4 **dadurch** erreicht, daß das Federband 3 mit Ausstanzungen 17 versehen ist.

## Patentansprüche

1. Federbandelement mit einem ein Schlauchende im wesentlichen ringförmig umfassenden Federband (3) und mit zwei einander überlappenden, im wesentlichen in Umfangsrichtung verlaufenden Spannenden (4, 5), wobei im klemmenden Zustand ein bestimmter erster Durchmesser vorliegt - Klemmzustand - und das Federband (3) entgegen der eigenen Federkraft mit Hilfe eines Spannwerkzeuges auf eine zweiten größeren Durchmesser aufspreizbar ist - Aufspreizzustand - und wobei das Federband (3) benachbart zu den Spannenden (4, 5) jeweils einen Freischnitt (6, 7) aufweist und die Spannenden (4, 5) und die Freischnitte (6, 7) so ausgebildet sind, daß das Spannwerkzeug im wesentlichen entlang der Umfangs-Mittellinie (8) des Federbandes (3) angreifen kann, **dadurch gekennzeichnet, daß** die Spannenden (4, 5) und die Freischnitte (6, 7) so ausgebildet sind, daß die Spannenden (4, 5) im Klemmzustand radial nicht über das dann kreisrunde Federband (3) überstehen und daß eine mechanische Überdehnungsschutzeinrichtung vorgesehen ist, indem die Spannenden (4, 5) je einen als Anschlag dienenden Vorsprung (10, 11) aufweisen, wobei die beiden Vorsprünge (10, 11) einander zugewandt sind.

2. Federbandelement nach Anspruch 1, **dadurch gekennzeichnet, daß** das Federband (3) einen über seinen Umfang (12) variierenden Querschnitt aufweist.

3. Federbandelement nach Anspruch 2, **dadurch gekennzeichnet, daß** das Federband (3) eine über seinen Umfang (12) variierende Breite (13) aufweist, wobei die Breite (13) in Richtung der Spannenden (4, 5) abnimmt.

4. Federbandelement nach einem der Ansprüche 1 bis 3, **dadurch gekennzeichnet, daß** die Breite (13) der Spannenden (4, 5) geringer als die Hälfte der maximalen Breite (13) des Federbandes (3) ist.

5. Federbandelement nach Anspruch 2, **dadurch gekennzeichnet, daß** das Federband (3) mit Austanzungen (17) versehen ist.

## Claims

1. Spring band element comprising a spring band (3) encompassing, substantially annularly, a hose end, and comprising two mutually overlapping clamping ends (4, 5) running substantially in the circumferential direction, wherein in the clamp-locking state a specific first diameter exists - clamping state - and the spring band (3) is expandable with the aid of a clamping tool, counter to its own spring force, into a second larger diameter - expansion state - and wherein the spring band (3) adjacent to the clamping ends (4, 5) has respectively a clearance cut (6, 7) and the clamping ends (4, 5) and the clearance cuts (6, 7) are configured such that the clamping tool can act substantially along the circumferential centerline (8) of the spring band (3) **characterized in that** the clamping ends (4, 5) and the clearance cuts (6, 7) are configured such that the clamping ends (4, 5) in the clamping state do not project radially over the then circular spring band (3) and that a mechanical overstretch protection mechanism is provided **in that** the clamping ends (4, 5) respectively have a projection (10, 11) serving as a stop, the two projections (10, 11) facing one another.

2. Spring band element according to Claim 1, **characterized in that** the spring band (3) has a cross section, which varies over its circumference (12).

3. Spring band element according to Claim 2, **characterized in that** the spring band (3) has a width (13), which varies over its circumference (12), the width (13) decreasing in the direction of the clamping ends (4, 5).

4. Spring band element according to any one of Claims 1 to 3, **characterized in that** the width (13) of the clamping ends (4, 5) is less than half the maximum width (13) of the spring band (3).

5. Spring band element according to claim 2, **characterized in that** the spring band (3) is provided with punch-outs (17).

## Revendications

1. Elément de bande à ressort comprenant une bande à ressort (3) entourant de manière essentiellement annulaire une extrémité de tuyau et comprenant deux extrémités de serrage (4, 5) se chevauchant, s'étendant essentiellement dans la direction périphérique, où, dans l'état de serrage, on a un premier diamètre déterminé - état de serrage - et la bande à ressort (3) peut être écartée à l'encontre de sa propre force de ressort à un deuxième diamètre plus grand à l'aide d'un outil de serrage - état d'écartement - et où la bande à ressort (3) présente à proximité des extrémités des serrage (4, 5) à chaque fois une découpure (6, 7), et les extrémités des serrage (4, 5) et les découpures (6, 7) sont réalisées de telle sorte que l'outil de serrage puisse venir en prise essentiellement le long de l'axe médian périphérique (8) de la bande à ressort (3), **caractérisé en ce que** les extrémités des serrage (4, 5) et les découpures (6, 7) sont réalisé de telle sorte que les extrémités de serrage (4, 5) dans l'état serré ne dépassent pas radialement au-delà de la bande à ressort (3) alors circulaire et ce que l'on prévoit un dispositif mécanique de protection contre les surextensions, en les extrémités de serrage (4, 5) présentent chacune une saillie (10, 11) servant de butée, les deux saillies (10, 11) étant tournées l'une vers l'autre.

2. Elément de bande à ressort selon la revendication 1 **caractérisé en ce que** la bande à ressort (3) présente une section transversale variant sur sa périphérie (12).

3. Elément de bande à ressort selon la revendication 2 **caractérisé en ce que** la bande à ressort (3) présente une largeur (13) variant sur sa périphérie (12), la largeur (13) diminuant dans la direction des extrémités de serrage (4, 5).

4. Elément de bande à ressort selon l'une quelconque des revendications 1 à 3 **caractérisé en ce que** la largeur (13) des extrémités de serrage (4, 5) est inférieure à la moitié de la largeur maximale (13) de la bande à ressort (3).

5. Elément de bande à ressort selon la revendication 2 **caractérisé en ce que** la bande à ressort (3) est pourvue d'estampages (17).
